# EUROPEAN PATENT APPLICATION

(11) **EP 3 290 185 A1**
(43) Date of publication of application: **07.03.2018**
(21) Application number: 16186559.7
(22) Date of filing: 31.08.2016
(51) Int. Cl.: B29C 65/48, B29C 65/14, B29C 65/52, B29C 65/54

(54) **METHOD AND APPARATUS FOR JOINING COMPONENTS**

(71) Applicant: Airbus Operations GmbH, 21129 Hamburg (DE)
(72) Inventor: LINDE, Peter, 21614 Buxtehude (DE); HIRANO, Yoshiyasu, 181-0015 Tokyo (JP)
(74) Representative: Isarpatent

(57) **Abstract**

Method of joining a first component (1) and a second component (2), the method comprising: arranging the first component (1) and the second component (2) adjacent one another to define an elongate joining space (12) between the first component (1) and the second component (2); and forming a joining seam (10) of seam material (13) along the joining space (12), such that the joining seam (10) interconnects the first and second components, wherein the joining seam (10) is formed progressively along the joining space (12) by a digital light processing, DLP, additive manufacturing process. And apparatus (200) for joining first and second components (1, 2), comprising a head (100) for forming a joining seam (10) along an elongate joining space (12) defined by and/or between the first and second components (1, 2) such that the joining seam (10) interconnects the said components (1; 2). The head (100) comprises: a seam material dispenser (110) for dispensing into the joining space (12) a seam material (13) in a liquid, curable state from one or more outlet openings (113) formed in an outlet end (111) of the dispenser (110); and a curing unit (120) which is configured to direct UV-light (U) onto a curing region (14) in the joining space (12), especially onto a curing plane (20) which extends transverse to the longitudinal direction (L) of the joining space (12).

## Description

### FIELD OF THE INVENTION

The present invention relates to a method and apparatus for joining components, especially plastic components, in aeronautical engineering applications.

### BACKGROUND OF THE INVENTION

The joining of components, especially structural components such as panels, ribs, stringers or beams, in aircraft and spacecraft construction typically involves any one or more of a variety of conventional techniques. These include mechanical fasteners, such as rivets, clips or screws, adhesives, and welding techniques. As aircraft construction today increasingly involves the use of composite materials, especially fibre-reinforced polymer composites, e.g. glass fibre-reinforced polymer (GFRP) composites and carbon fibre-reinforced polymer (CFRP) composites, it is becoming increasingly important to develop new manufacturing techniques suited to these materials. Polymer or plastic components, such as plates, panels and structural elements are thus now employed as structural components in a wide variety of applications (e.g. fuselage structure) in aircraft construction.

It is an object of the present invention to provide a new and improved method and apparatus for joining components in an efficient and reliable manner. In particular, it would be useful to provide a new method and apparatus for joining components, especially polymer-based components, in the construction of aircraft or spacecraft, with which a faster and/or a more automated procedure may be provided.

### SUMMARY OF THE INVENTION

In accordance with the invention, a method and a corresponding apparatus as recited in claim 1 and claim 10, respectively, are provided for joining components, particularly in nautical, aeronautical and/or automotive applications. A number of preferred features are recited in the dependent claims.

According to one aspect, therefore, the invention provides a method of joining a first component and a second component, the method comprising steps of:
arranging the first component and the second component adjacent one another to define an elongate joining space between the first component and the second component;
forming a joining seam of seam material along the joining space, such that the joining seam interconnects the first and second components,
wherein the joining seam is formed progressively along the joining space by a digital light processing, DLP, additive manufacturing process.

Thus, the method of the invention involves progressively forming of a joining seam or welding seam by means of a digital light processing additive manufacturing process, which will hereinafter also be referred to as DLP additive manufacturing. In this regard, the joining seam is additively manufactured in a longitudinally extending joining space provided, e.g. as a gap, between the first and second components to be joined. This has the advantage that the joining seam can be produced with very high process speeds, as the seam material forming the joining seam is cured actively under the influence of light. Another advantage of the method of the invention is that the DLP additive manufacturing process provides for a dust-free and noise-free joining of components. Furthermore, relatively inexpensive materials, such as thermosetting polymer resins or plastics, can be employed for forming the joining seam. The DLP additive manufacturing process also enables the seam to be formed along the joining space in a precise manner, with voids reliably avoided and a good mechanical strength of the seam achieved.

In a preferred embodiment, the method is designed or adapted for use with components comprised of a composite material, especially of a fibre-reinforced polymer composite, such as a glass fibre-reinforced polymer (GFRP) composite or a carbon fibre-reinforced polymer (CFRP) composite. The additive manufacturing process may thus be configured to generate or form the joining seam from a material that is adapted to fuse or bond with a fibre-reinforced polymer in the structure. It will be appreciated, however, that the method may also be carried out with one or more components comprised of a metal, such that the DLP additive manufacturing process is configured to generate or form the joining seam from a material that can fuse or bond with a metallic component. In addition to the fused or bonded connection that arises via the inventive method, the components may also be joined or secured together with supplementary mechanical fasteners, such as rivets, screws, bolts or the like; to augment a connection via the joining seam.

In a preferred embodiment, the seam material which forms the joining seam is a polymer resin, especially a thermosetting polymer resin. In a particularly preferred embodiment, the seam material is selected from the group comprising at least one of: acrylates, polyurethanes, cyanate esters, or the like.

In a preferred embodiment, the step of forming the joining seam progressively by the DLP additive manufacturing process comprises: depositing the seam material in a liquid and curable state into a curing region of the joining space successively along a longitudinal direction of the joining space; and curing the liquid seam material in the curing region to form the joining seam by focusing UV-light on the curing region, especially on a curing plane in the curing region which extends transverse to the longitudinal direction of the joining space. The above steps of depositing and curing the liquid seam material are carried out repeatedly and/or successively to build up the joining seam progressively along the longitudinal direction of the joining space. In this way, the progressive or successive forming of the joining seam is performed continuously in the longitudinal direction, preferably with a constant growth rate of the joining seam in the longitudinal direction. The UV-light is light having a wavelength in the ultraviolet spectrum (i.e. wavelength in the range of about 100 nm to about 380 nm). By focussing this light on the curing plane, the UV-light causes the liquid seam material in this area of the curing plane to cure. The curing plane hence forms a phase boundary between the liquid seam material and cured seam material. It is a particular advantage of this embodiment that the curing plane can be generated by focusing the UV-light in a very precise and distinct manner. In this way, the joining seam can be provided in any desired cross-section of the joining space in a precise and efficient manner.

In a preferred embodiment, the step of forming the joining seam comprises successively moving the curing region of the joining space in the longitudinal direction relative to the first and second components. In this way, the position of the curing region and/or the curing plane can be moved, thereby to move the phase interface or boundary between the liquid seam material and cured seam material along the joining space as the joining seam is successively built up. On the other hand, the first and second components may be moved relative to an apparatus for dispensing the liquid seam material into the joining space and for forming the joining seam. In this way, although the curing region and/or the curing plane may be notionally fixed in space, they nevertheless move relative to the first and second components, thereby displacing the phase interface or boundary of the liquid seam material and cured seam material along the joining space as the joining seam is successively built up.

In a preferred embodiment, the step of depositing the liquid seam material involves dispensing the liquid seam material from a head that moves progressively along the joining space. The head may thus include a container that provides a supply reservoir for the liquid seam material which is preferably movable within the joining space. The curing region is preferably delimited with respect to the longitudinal direction on one side by means of the dispenser. This allows precise and direct deposition of the seam material, e.g. in the form of a plastic material. In particular, a void free and cross-section filling volume of liquid, curable seam material is advantageously deposited and held in the curing region.

In a preferred embodiment, the step of curing the liquid seam material in the curing region comprises focussing UV-light through an oxygen container which moves progressively along the joining space in the longitudinal direction.

In a preferred embodiment, the joining space is defined by and/or between at least a first surface of the first component and at least a second surface of the second component. The first surface and the second surface are typically oriented to face one another. The first and second surfaces cooperate to define a cross-sectional shape of the joining space transverse to the longitudinal direction. In this regard, the cross-sectional shape may, for example, be V-shaped, trapezoid-shaped, or rectangular-shaped. The joining space is therefore defined as a gap or void which is formed between opposing surfaces of the components to be joined. In the case of a V-shaped cross-section of the joining space, edges of the inclined first and second surfaces of the components to be joined may be abutted to each other to close or seal a base of the joining space. In this way, additional elements may not be required to provide a closed base of the joining space. Trapezoid-shaped or rectangular-shaped cross-sections of the joining space can provide a joining seam with improved or enhanced mechanical strength.

In a preferred embodiment, a first end of the joining space is closed or sealed by a sealing member and the joining seam is successively formed in the longitudinal direction along the joining space starting from the first end. The sealing member is thus arranged across or covering an end face of the first and second components, i.e. transverse to the longitudinal direction of the joining space. In this way, the sealing member closes or seals the end of the joining space to prevent leakage or escape of the liquid seam material. This allows formation of the joining seam to be started at this end, i.e. by depositing the liquid, curable seam material in the joining space as described above.

According to another broad aspect, the invention provides an apparatus for joining first and second components, comprising: a head for forming a joining seam along an elongate joining space defined by or between the first and second components such that the joining seam interconnects the components. The head comprises: a seam material dispenser for dispensing into the joining space a seam material in a liquid, curable state from one or more outlet openings formed in an outlet end of the dispenser; and a curing unit configured to focus UV-light on a curing region in the joining space, and especially on a curing plane transverse to the longitudinal direction of the joining space.

In a preferred embodiment, the head is configured for movement in a longitudinal direction along the joining space. That is, the head is preferably movable relative to the first and second components. The head of the apparatus may also include an oxygen container for holding pressurised oxygen. In this regard, the oxygen container is preferably arranged between the curing unit and the seam material dispenser, and the oxygen container is preferably coupled to the dispenser via an oxygen-permeable member. Due to the arrangement of the curing unit and the seam material container, the UV-light emitted by the curing unit typically passes through the oxygen container.

In a preferred embodiment, the dispenser is configured to be received within the joining space defined by and/or between the first and second components. At least a portion of the dispenser, especially the outlet end of the dispenser, is preferably configured to substantially conform with a cross-sectional shape of the joining space transverse to the longitudinal direction thereof. This serves to confine or delimit the curing region adjacent the outlet end of the dispenser which receives and holds the liquid seam material dispensed and prevents its leakage or escape prior to the curing operation.

In a preferred embodiment, the head of the apparatus has an elongate housing which generally conforms with a cross-sectional shape of the joining space. In this way, head of the apparatus can be at least partially received within the elongate joining space. The housing is preferably elongate for at least partial receipt in the joining space and has opposite side walls which extend longitudinally from the outlet end of the dispenser. The side walls may, for example, have a V-shaped cross-section, a trapezoid-shaped cross-section, or a rectangular-shaped cross-section for generally conformity with a cross-sectional shape of the joining space.

It is an advantage of the apparatus that it is suitable for carrying out the above described method in a very efficient manner. For example, the arrangement of the curing unit and the one or more dispensing openings at opposite ends of the head provides several benefits. The head provides a very compact configuration and may be inserted into a small, longitudinally extending joining space between the components to be joined. Further, the dispensing openings being formed at a front end of the dispenser allows a continuous, successive formation of a joining seam, which in turn allows high processing speed. The form-fitting insertion of the head into various possible joining spaces allows the head to be easily guided along the surfaces of the components to be joined defining the joining space, which results in a very precise formation of the joining seam and efficient process.

In a preferred embodiment, the curing unit comprises a UV-light source and an array of micro-mirrors which are movably mounted or tiltable and adjustable such that UV-light generated by the UV-light source is directed or focussed on a curing plane of the dispensed seam material. The UV-light source may be a UV-LED or the like, and the curing unit may have a plurality of very small mirrors. Each of the mirrors may have a surface area of between approximately 100 µm² and 400 µm². The orientation of the mirrors is adjustable, for example, by means of a suitable actuators. In this manner, the UV-light may be focused in a very precise manner. Further, the array of such movably mounted micro-mirrors allows flexible shaping and adaption of a curing plane with respect to a cross-section of the joining space.

According to a further broad aspect, the invention provides the use of a digital light processing, DLP, additive manufacturing process for producing a joining seam which joins a first component and a second component. The use of such a DLP process for forming a joining seam provides the benefit of fast process speed, low process cost, and dust-free and noise-free formation of the seam.

Within the scope of the present invention "focusing" light to a predetermined plane in particular may be understood as directing a predefined amount of radiation energy per area. The predefined amount of radiation energy per area may be an amount of energy which exceeds an activation energy of a chemical reaction which causes a liquid resin material to cure and thereby form a joining seam.

With respect to directions and axes concerning the extent of physical structures within the scope of the invention, an extent of a direction or a structure "along" an axis, direction, or structure includes that said direction or structure, and especially tangents which result at a particular site of the respective structure, enclose an angle which is smaller than 45 degrees, preferably smaller than 30 degrees, and most preferably extend parallel to each other.

With respect to directions and axes concerning the extent of physical structures within the scope of the invention, an extent of a direction or a structure "along" an axis, direction, or structure includes that said direction or structure, and especially tangents which result at a particular site of the respective structure, enclose an angle which is greater than 45 degrees, preferably greater than 60 degrees, and most preferably extend perpendicular to each other.

### BRIEF DESCRIPTION OF THE DRAWINGS

The present invention will be explained in more detail with reference to exemplary embodiments depicted in the accompanying drawings. The drawings are included to provide a further understanding of the invention and constitute a part of this specification. The drawings illustrate embodiments of the invention and together with the following description serve to explain the principles of the invention. Other embodiments of the invention and many of the advantages of the invention will be readily appreciated with reference to the following description. The elements of the drawings are not necessarily to scale relative to each other. Like reference signs designate corresponding or similar parts. In the drawings:
- Fig. 1: schematically illustrates a method according to an embodiment of the invention as a perspective view to an arrangement of components to be joined;
- Fig. 2: schematically illustrates a top view to an arrangement of components during performing a method according to an embodiment of the invention;
- Fig. 3: schematically illustrates a method according to a further embodiment of the invention as perspective view to an arrangement of components to be joined;
- Fig. 4: schematically illustrates a method according to a further embodiment of the invention as cross-sectional view to an arrangement of components to be joined;
- Fig. 5: schematically illustrates a welding head according to an embodiment of the invention;
- Fig. 6: schematically illustrates a method according to a further embodiment of the invention as top view to an arrangement of components to be joined; and
- Fig.7: schematically illustrates a perspective view of an apparatus of components being joined by means of a joining seam which has been produced by means of a method according to an embodiment of the invention.

It will be appreciated that common and well understood elements that may be useful or necessary in a commercially feasible embodiment are not necessarily depicted in order to facilitate a more abstracted view of the embodiments. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

### DETAILED DESCRIPTION OF EMBODIMENTS OF THE INVENTION

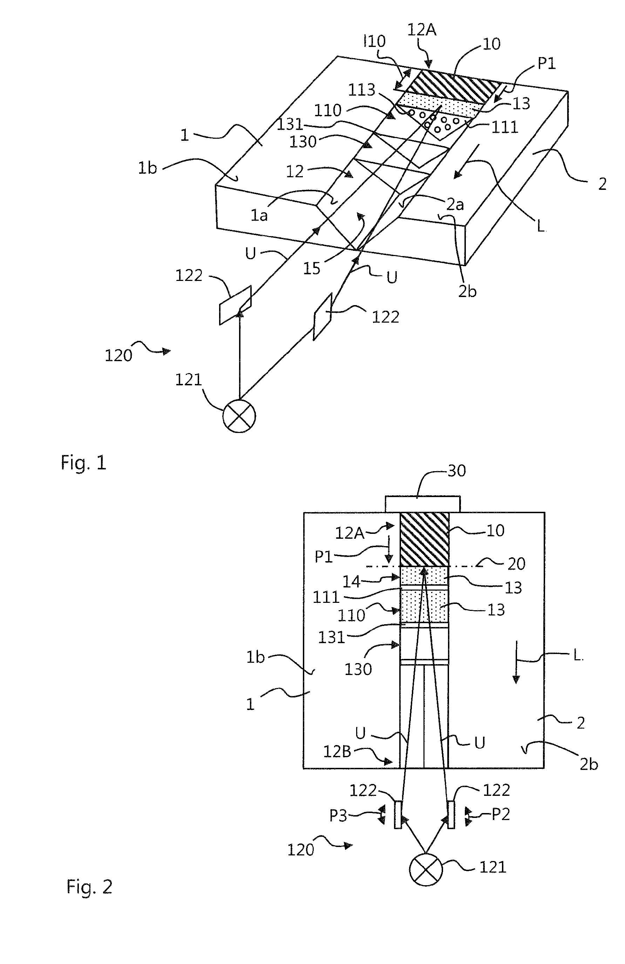

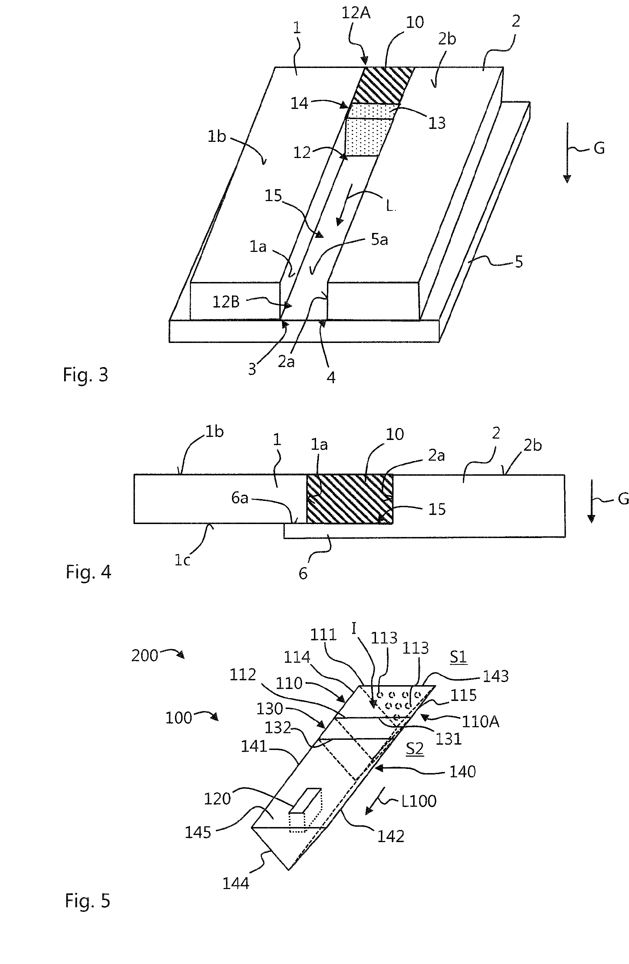

Fig. 1 shows a method for joining a first component 1 to a second component 2. The first and the second component 1, 2 both are exemplarily shown in Fig. 1 as planar extending plates and for example may be components made of a plastic material. The first component 1 comprises a first surface 1 a which extends inclined to a top planar surface 1 b of the first component 1. The second component 2 comprises a second surface 2a which extends inclined to a top planar surface 2b of the second component 2. According to the method of the present invention, the first and the second component 1, 2 in a first step are arranged adjacent to one another to define an elongate joining space 12 between them. As shown in Fig. 1, the first and the second component may be arranged relative to each other such that the first and the second surface 1 a, 2a face each other. In particular, the first and the second component 1, 2 may be arranged to abut each other at facing edges of the first and second surfaces 1 a, 2a, as is exemplarily shown in Fig. 1. According to the example shown in Fig. 1, the first and the second surface 1 a, 2a thereby form a V-shaped cross-section of the joining space 12. Further, the first and the second surface 1 a, 2a together form a bottom 15 of the joining space 12. Alternatively, the first and the second component 1, 2 may be arranged spaced from each other at facing edges of the first and second surfaces 1 a, 2a, as is exemplarily shown in Fig. 3 which will be described in greater detail below.

As shown in Fig. 1, the joining space 12 is formed by and/or between the first surface 1a of the first component 1 and the second surface 2a of the second component 2. The elongate joining space 12 in particular extends in a longitudinal direction L along or parallel to the edges of the first and second surfaces 1 a, 2a; i.e. generally between the first and second components 1, 2. In this way, the longitudinal direction L may be defined by the longitudinal extent of the first and second surfaces 1 a, 2a.

The method comprises forming a joining seam 10 from a seam material 13 in the joining space 12. The seam material 13 in particular may comprise a plastic or polymer resin material. As is schematically shown in Fig. 1, the joining seam 10 is progressively formed along the joining space 12, in particular in the longitudinal direction L, by a digital light processing, DLP, additive manufacturing process. In Fig. 1, the joining seam 10 is already formed over a partial length I10 of the joining space 12 measured from a first end 12A of the joining space 12 with respect to the longitudinal direction L.

According to the exemplary embodiment of the method shown in Fig. 1, the digital light processing additive manufacturing process comprises depositing the seam material 13 in a liquid, curable state to a curing region 14 of the joining space 12. The curing region 14 is at a forward face of the joining seam 10 which has already been formed in the joining space 12. As shown in Fig. 1, the seam material 13 may for example be deposited in the curing region 14 by dispensing that material from a seam material dispenser 110, which may optionally include a material supply container 110A, that is moved along the joining space 12 in the longitudinal direction L. The material dispenser 110 comprises an outlet end 111 in which one or more outlet openings 113 are formed. As is exemplarily shown in Fig. 1, the supply container 110A may comprise a plurality of outlet openings formed in an end wall of the container 110A. The outlet openings of the container may thus form the outlet openings 113 of the material dispenser 110 through which openings 113 the liquid seam material 13 is caused to flow into the curing region 14. The end wall of the container 110A exemplarily forms the outlet end 111 of the material dispenser 110. For forming the joining seam 10 from the liquid seam material 13 deposited in the curing region 14, light U, and especially UV-light, may be focused onto a curing plane 20 as is schematically illustrated in Fig. 1. The curing plane 20 extends transvers to the longitudinal direction L of the joining space 12. This can best be seen from Fig. 2. The curing plane 20 is provided in the curing region 14. In particular, the curing plane 20 defines a phase boundary or interface between the cured seam material of the joining seam 10 and the liquid seam material 13 being introduced or deposited in the curing region 14 between the joining seam 10 and the dispenser 110.

By progressively and repeatedly supplying the liquid, curable seam material 13 to the curing region 14 and curing the seam material 13 in the curing plane 20, the joining seam 10 may be grown or built up in the longitudinal direction L along the joining space 12. This is schematically shown in Fig. 1 by means of arrow P1.

In Fig. 1, a curing unit 120 is schematically illustrated as a functional arrangement. The curing unit 120 comprises a light source 121 which is applicable to generate UV-light light beams U. Further, the curing unit 120 comprises an array of micro-mirrors 122 for directing or focusing the UV-light beams U to the curing plane 20. The array of micro-mirrors 122 may advantageously be movably mounted or tiltable as is schematically shown in Fig. 2 by means of arrows P2, P3.

Fig. 1 shows further, that the light is preferably directed or focused through an oxygen container 130. Preferably, the oxygen container 130 is arranged between curing unit and the seam material dispenser 110. In particular, when the dispenser is realized as a container 110A, the oxygen container may be arranged adjacent thereto in the longitudinal direction L within the joining space 12. During formation of the joining seam 10, the oxygen container 130 is being moved in the joining space 12 along the longitudinal direction L.

Fig. 2 shows the arrangement of Fig. 1 in a top view of the upper planar surfaces 1b, 2b of the first and second components 1, 2. In addition to the exemplary illustration of the method in Fig. 1, a sealing member 30, which may be realized as a plate, is arranged at the first end 12A of the joining space 12 shown in Fig. 2. As Fig. 2 schematically shows, the joining space 12 at its first end 12A is thereby closed or sealed by the sealing member 30. In particular, sealing member 30 forms a barrier for the liquid seam material 13 when it is initially supplied to the joining space 12. The joining seam 10 is then progressively formed along the longitudinal direction L of the joining space 12 starting from the first end 12A as schematically shown by means of arrow P1 in Fig. 2.

Fig. 3 exemplarily shows a further possible arrangement of the first and second components 1, 2 to be joined by means of the method described above. For the sake of clarity, the curing unit 120, the material dispenser 110 and the oxygen container 130 are omitted from Fig. 3. The first and second components 1, 2 are both exemplarily shown in Fig. 3 as planar extending plates, as described above with reference to Fig. 1. The first and second components 1, 2 are arranged relative to each other such that the first and second surfaces 1 a, 2a face each other. In contrast to the components 1, 2 shown in Fig. 1, the first and the second components 1, 2 in Fig. 3 are arranged spaced from each other at facing edges 3, 4 of the first and second surfaces 1 a, 2a. That is, the first and second surfaces 1 a, 2a are exemplarily shown to extend perpendicular to the upper surfaces 1 b, 2b, thereby forming a joining space 12 having a rectangular shaped cross-section. Of course, the first and second surfaces 1 a, 2a could also be provided as inclined surfaces so as to form a joining space 12 having a trapezoidal shaped cross-section (not shown).

Referring further to Fig. 3, the first and second components 1, 2 are arranged at a support member 5, which may be realized as a plate. Further, the first and second components 1, 2 are arranged at a supporting surface 5a of the support member 5 which thereby forms a base 15 to the joining space 12. The support member 5 in particular may be arranged below the first and second components 1, 2 with respect to the direction of gravity G. As is shown in Fig. 3, the joining seam 10 may be formed in the joining space 12 in the same manner as described above. In particular, Fig. 3 exemplarily shows that the joining seam 10 is grown or built up in the longitudinal direction L along the joining space 12 starting from the first end 12A of the joining space 12 by progressively curing liquid seam material 13 which is deposited in the curing region 14. With regard to the liquid seam material 13, the bottom member 5 covers and seals the curing space 12.

Additionally or alternatively to the support member 5, one of the first or second components 1, 2 to be joined may be provided with an overlap ledge or flange 6. In Fig. 4 this is exemplarily illustrated for the second component 2, which comprises the ledge or flange 6 protruding from the second surface 2a. The first and the second components 1, 2 are arranged such that the ledge or flange 6 overlaps with the first component 1, in particular such that a first surface 6a of the flange 6 contacts a lower planar surface 1 c of the first component 1; i.e. oriented facing the opposite side of the first component 1. The ledge or flange 6 thereby forms a base 15 of the joining space 12 which again covers and seals same.

Fig. 5 schematically shows an exemplary configuration of an apparatus 200 for joining the first and second component 1, 2. The apparatus 200 comprises a seam forming head 100. The head 100 includes a curing material dispenser 110, which preferably comprises a material supply and/or dispensing container 110A, a curing unit 120 and an optional oxygen container 130.

The dispenser 110 comprises a housing which includes a material supply and/or dispensing container 110A with a front wall at an outlet end 111 of the dispenser 110. Further, a plurality of output openings are formed in the front wall which provide outlet openings 113 of the dispenser 110. The plurality of openings open to a first side S1 and thereby fluidly connect an interior I of the container 110A to the first side S1 for transmission of the liquid seam material 13. As shown in Fig. 5, the material supply and/or dispensing container 110A further includes a second rear wall 112 spaced from the front wall 111 in a longitudinal direction L100. The interior I of the material container 110A extends between the front wall and the rear wall 112 of the container 110A. The material container 110A further includes a first side wall 114 and a second sidewall 115, each of which extends between the front wall and the rear wall 112. As is shown exemplarily in Fig. 5, the side walls 114, 115 of the material container 110A may define a V-shaped cross-section. In particular, the front wall and the rear wall 112 of the container 110A may both be configured as plates with V-shaped circumferences, too. Of course, side walls 114, 115 of the material container 110A may alternatively define a rectangular shaped or a trapezoidal shaped cross-section of the material deployment container 110A. By this configuration, an elongated housing 140 may be formed.

The curing unit 120 is configured to direct and focus UV-light U onto a curing plane 20 and accordingly forms a UV-light projecting unit. The curing unit 120 and the curing plane 20 are arranged on opposite sides of the front end 111 of dispenser 110. In particular, the curing unit 120 with regard to the longitudinal direction L100 is arranged on a second side S2 of the material deployment container 110A, whereby the second side S2 lies opposite to the first side S1 with respect to the longitudinal direction L100. As shown in Fig. 5, the curing unit 120 is located facing the end wall 112 of the material deployment container 110A. In particular, the UV-light projecting unit 120 may be arranged spaced from the end wall 112 of the material deployment container 110A in the longitudinal direction L100.

As is schematically shown in Fig. 1 and Fig. 2, the UV-light projecting unit 120 preferably comprises a light source 121, particularly a UV-light source 121, and an array of micro-mirrors 122 which are movably mounted and adjustable such that light, i.e. UV-light U, generated by the light source 121 is focused on the curing plane 20. Fig. 1 and Fig. 2 both show, by way of example and only for the sake of functional explanation, an array comprising two micro-mirrors 122, which are arranged opposite to each other. As will be appreciated, however, an actual array of micro mirrors 122 may comprise hundreds or thousands of mirrors arranged in the array; e.g. a rectangular array of 4000 x 2100 mirrors. The mirrors 122 are adjustable such that the UV-light U may be focused on the curing plane 20. For adjusting the mirrors 122, an actuator system (not shown) may be provided which comprises actuators mechanically coupled to the mirrors 122 so as to adjust a desired tilt or orientation of the mirrors. The actuator system may be functionally coupled to or be part of a control system (not shown) providing control signals to actuate the actuators for adjusting the desired tilt of the mirrors 122. Moreover, more than one light source 121 may be provided. The light source 121 may for example be realized as an UV-LED or an array thereof.

As is exemplarily shown in Fig. 5, the optional oxygen container 130 is preferably arranged between the curing unit 120 and the dispenser 110 with respect to the longitudinal direction L100. As is shown in Fig. 5, and may also be derived from Figs. 1 and 2, the oxygen container 130 is preferably coupled to the material container 110A by means of an oxygen permeable connection plate 131. The connection plate 131, for instance a plate made of a glass material, is formed by the second end wall 112 of the material container 100A. Further, with regard to the longitudinal direction L100, the connection plate 131 forms a first front wall of the oxygen container 130. The oxygen container 130 further comprises a second end wall 132 lying opposite to the first front wall 131 with respect to the longitudinal direction L100.

As is exemplarily shown in Fig. 5, the material supply container 110A, the UV-light projecting unit 120 and the optional oxygen container 130 may preferably be integrated in the common housing 140. The housing 140 preferably has opposite side walls 141, 142 which extend longitudinally from the outlet end 111 of the dispenser 110. In particular, sections of the side walls 141, 142 of the housing 140 may form the side walls 114, 115 of the material container 110A and of the oxygen container 130. A front wall 143 of the housing 140 is formed by the front wall 111 of the material deployment container 110. The housing further may comprise an end wall 144 lying opposite to the front wall 143 with respect to the longitudinal direction L100 and a cover or lid 145. By this configuration, an elongate housing 140 which at least partly, and preferably generally, conforms with a cross-sectional shape of the joining space 12 may be provided.

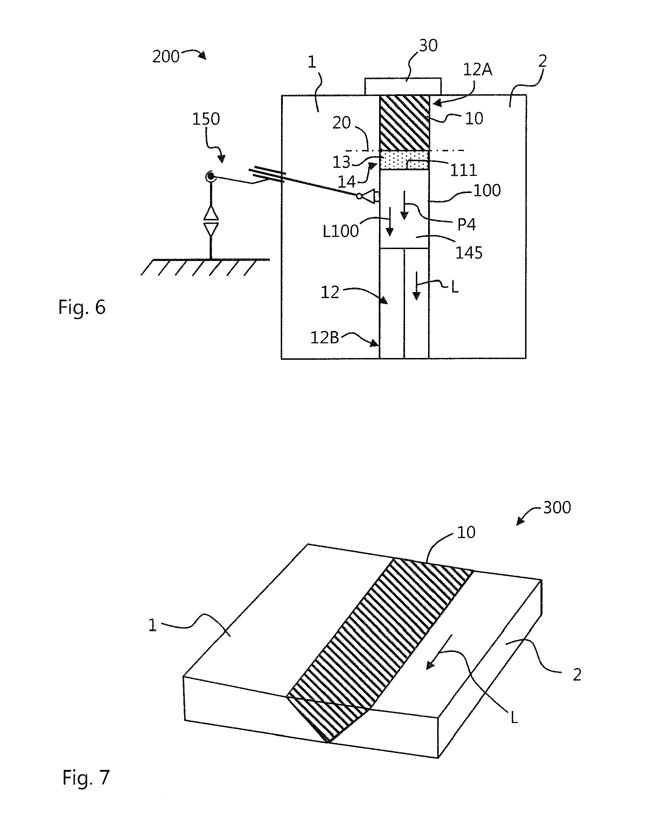

Fig. 6 by way of example shows the joining of first and second components 1, 2 by a joining seam 10 which is formed by means of the seam forming head 100. With regard to details of the method for joining the first and second components 1, 2, reference is made to the above description, especially with regard to Figs. 1 and 2. The dispenser 110 is arranged in the joining space 12 with its outlet end 111 close to the first end 12A of the joining space 12. Advantageously, this may be realized by introducing the head 100 into the joining space 12 such that the front wall of the material dispensing container 110A is positioned close to the first end 12A of the joining space 12 so as to form a curing space 14 between the sealing member 30 and the front wall and such that the longitudinal direction L of the joining space 12 and the longitudinal direction L100 of the head 100 essentially align each other. Further, liquid curing material 13 is dispensed into the curing space 14 through the one or more openings 113 of the dispenser 110 and the curing unit 120 focusses light to the curing plane 20 which causes the seam material 13 to cure. Following this, the outlet end 111 of the dispenser 110 is moved along the joining space 12 to increase a distance to the sealing member 30. This may be realized by moving the head 100 along the longitudinal direction L of the joining space 12 towards a second end 12B thereof. Thereby, the joining seam 10 is progressively formed or built up along the longitudinal direction L of the joining space 12.

Movement of the head 100 is schematically illustrated in Fig. 6 by arrow P4 and may be performed by a moving device 150 mechanically coupled to the welding head 100. In Fig. 6, the moving device 150 is exemplarily and schematically illustrated as a manipulator arm of a robot. The speed of movement of the head 100 may for example be correlated to the rate of supply of liquid curing material 13 into the curing space 14 and/or the curing time required in the curing plane 20 in such a manner that the curing space 14 comprises a constant length or volume.

Fig. 7 shows an assembly 300 comprising the first component 1 and the second component 2 being joined to each other by means of the joining seam 10 which has been formed by means of the above described digital light processing additive manufacturing process. In Fig. 7, the completed joining seam 10 has the basic shape of a fillet weld. Depending on the shape of the joining space 12, of course, the joining seam 10 may take the form of a butt weld or the like.

Although specific embodiments have been illustrated and described herein, it will be appreciated by those of ordinary skill in the art that a variety of alternative or equivalent implementations may be substituted for the specific embodiments shown and described without departing from the scope of the present invention. It will be appreciated that the exemplary embodiment or exemplary embodiments are only examples and are do limit the scope, applicability, or configuration in any way. That is, this application is intended to cover any adaptations or variations of the specific embodiments discussed herein. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects. Any directional terminology, such as "top", "bottom", "left", "right", "above", "below", "horizontal", "vertical", "front", "rear", and similar terms are merely used for explanatory purposes and are not intended to limit the embodiments to the specific arrangements shown in the drawings.

### LIST OF REFERENCE SIGNS

- 1: first plastic component
- 1 a: first surface of the first component
- 1 b: top planar surface of the first component
- 1c: lower planar surface of the first component
- 2: second plastic component
- 2a: second surface of the second component
- 2b: top planar surface of the second component
- 3: edge of the first surface
- 4: edge of the second surface
- 5: support plate
- 6: ledge
- 10: joining seam
- 12: joining space
- 12A: first end of joining space
- 12B: second end of joining space
- 13: seam material
- 14: curing region
- 15: bottom of the joining space
- 20: curing plane
- 30: sealing member
- 100: head
- 110: seam material dispenser
- 110A: material supply and/or dispensing container
- 111: outlet end
- 112: second end wall of the material deployment container
- 113: output openings
- 114: first side wall of the material deployment container
- 115: second side wall of the material deployment container
- 120: curing unit
- 121: light source
- 122: mirror
- 130: oxygen container
- 131: connection plate
- 132: end wall of the oxygen container
- 140: housing
- 141: side wall of the housing
- 142: side wall of the housing
- 143: front wall of the housing
- 144: end wall of the housing
- 145: lid of the housing
- 200: apparatus
- 300: assembly
- G: direction of gravity
- I: interior of the material deployment container
- I10: length
- L: longitudinal direction of the joining space
- L100: longitudinal direction of the welding head
- P1: arrow
- P2: arrow
- P3: arrow
- P4: arrow
- S1: first side
- S2: second side
- U: UV-light

## Claims

1. Method of joining a first component (1) and a second component (2), the method comprising steps of:
arranging the first component (1) and the second component (2) adjacent one another to define an elongate joining space (12) between the first component (1) and the second component (2);
forming a joining seam (10) of seam material (13) along the joining space (12), such that the joining seam (10) interconnects the first and second components (1; 2),
wherein the joining seam (10) is formed progressively along the joining space (12) by a digital light processing, DLP, additive manufacturing process.

2. Method according to claim 1, wherein the step of forming the joining seam (10) progressively by the DLP additive manufacturing process comprises:
depositing the seam material (13) in a liquid and curable state into a curing region (14) of the joining space (12) along a longitudinal direction (L) of the joining space (12); and
curing the liquid seam material (13) in the curing region (14) to form the joining seam (10) by directing UV-light (U) on the curing region (14), especially on a curing plane (20) in the curing region (14) which extends transverse to the longitudinal direction (L) of the joining space (12).

3. Method according to claim 2, wherein the steps of depositing and curing the seam material (13) are carried out repeatedly and/or successively to build up the joining seam (10) progressively along the longitudinal direction (L) of the joining space (12).

4. Method according to claim 2 or claim 3, wherein the forming of the joining seam (10) comprises successively moving the curing region (14) of the joining space (12) along the longitudinal direction (L);
wherein the step of depositing the liquid seam material (13) desirably comprises dispensing the liquid seam material (13) from a container (110A) that moves progressively along the joining space (12).

5. Method according to any one of claims 2 to 4, wherein the step of curing the liquid seam material (13) in the curing region (14) comprises focussing UV-light (U) through an oxygen container (130) which moves progressively along the joining space (12) in the longitudinal direction (L).

6. Method according to any one of the preceding claims, wherein the joining space (12) is defined by and/or between at least one first surface (1 a) of the first component (1) and at least one second surface (2a) of the second component (2), wherein the first surface (1a) and the second surface (2a) are oriented to face towards each other.

7. Method according to claim 6, wherein the first and second surfaces (1 a; 2a) define a cross-sectional shape of the joining space (12) transverse to the longitudinal direction (L), wherein the cross-sectional shape is preferably V-shaped, trapezoid-shaped, or rectangular-shaped.

8. Method according to any one of the preceding claims, wherein a first end (12A) of the joining space (12) is closed or sealed by a sealing member (30) and wherein the joining seam (10) is successively formed in the longitudinal direction (L) along the joining space (12) starting from the first end (12A).

9. Method according to any one of the preceding claims, wherein the seam material (13) which forms the joining seam (20) is selected from the group comprising at least one of acrylates, polyurethanes, cyanate esters or the like.

10. Apparatus (200) for joining first and second components (1, 2), comprising a head (100) for forming a joining seam (10) along an elongate joining space (12) defined by and/or between the first and second components (1, 2) such that the joining seam (10) interconnects the said components (1; 2), the head (100) comprising:
a seam material dispenser (110) for dispensing a seam material (13) in a liquid, curable state from one or more outlet openings (113) formed in an outlet end (111) of the dispenser (110) into the joining space (12); and
a curing unit (120) which is configured to direct UV-light (U) onto a curing region (14) in the joining space (12), especially onto a curing plane (20) which extends transverse to the longitudinal direction (L) of the joining space (12).

11. Apparatus (200) according to claim 10, wherein the head (100) is adapted for movement in a longitudinal direction (L) along the joining space (12), wherein the head (100) preferably further includes a container (130) for pressurised oxygen, the oxygen container (130) being arranged between the curing unit (120) and the seam material dispenser (110), wherein the oxygen container (130) is preferably coupled to the dispenser (110) via an oxygen-permeable member (131).

12. Apparatus (200) according to claim 10 or claim 11, wherein the dispenser (110) is configured to be received within the joining space (12) defined by or between the first and second components (1, 2), wherein at least a portion of the dispenser, especially the outlet end (111) of the dispenser (110), is preferably configured to substantially conform with a cross-sectional shape of the joining space (12) transverse to the longitudinal direction (L) thereof.

13. Apparatus (200) according to claim 12, wherein the head (100) comprises an elongate housing (140) which generally conforms with a cross-sectional shape of the joining space (12), wherein the housing (140) preferably has opposing side walls (141; 142) extending longitudinally from the outlet end (111) of the dispenser (110), wherein the sidewalls (141; 142) having a V-shaped cross-section, a trapezoid-shaped cross-section or a rectangular-shaped cross-section.

14. Apparatus (200) according to any one of claims 10 to 13, wherein the curing unit (120) comprises an UV-light source (121) and an array of micro mirrors (122) which are movably mounted and adjustable such that UV-light (U) generated by the UV-light source (121) is focused on a curing plane (20) of the dispensed seam material.

15. Use of a digital light processing, DLP, additive manufacturing process for producing a joining seam (10) which joins a first component (1) to a second component (1).
